Europäisches Patentamt

European Patent Office

Office européen des brevets

(19)

(11) Veröffentlichungsnummer: **0 108 987**
**A1**

# (12) EUROPÄISCHE PATENTANMELDUNG

(21) Anmeldenummer: **83110852.7**

(22) Anmeldetag: **29.10.83**

(51) Int. Cl.³: **G 03 D 15/00, G 06 K 17/00**

(30) Priorität: **29.10.82 CH 6306/82**

(43) Veröffentlichungstag der Anmeldung: **23.05.84**
**Patentblatt 84/21**

(84) Benannte Vertragsstaaten: **AT BE CH DE FR GB IT LI LU NL SE**

(71) Anmelder: **Photocolor Kreuzlingen AG,
Sonnenwiesenstrasse 2, CH-8280 Kreuzlingen (CH)**

(72) Erfinder: **Kobert, Peter, Hochstrasse 30A,
D-7753 Allensbach (DE)**

(74) Vertreter: **Fiedler, Otto Karl, Dipl.-Ing., Hemminger
Strasse 4, D-7015 Korntal-Münchingen 2 (DE)**

(54) **Durchlauf-Sortiereinrichtung für Photographie-Filmbehälter sowie Verfahren zum Betrieb einer solchen Einrichtung.**

(57) Bei der Sortierung von Photographie-Filmbehältern zwecks nachfolgender Entwicklung besteht das Problem, die Zuordnung zu den individuell zugehörigen Hüllen, im allgemeinen Kassettentaschen, auf einfache und arbeitssparende Weise herzustellen und während des Durchlaufens der Entwicklungsarbeiten bis zur abschliessenden Wiederzusammenführung aufrechtzuerhalten.

Zur Lösung werden die Filmbehälter (FK) und Hüllen (HL) beim Trennen in einander paarweise zugeordnete Aufnahmen (AF bzw. AH) eingebracht. Durch datentechnische Erfassung geeigneter Individualdaten für die Paare von zusammengehörigen Filmbehältern (FK) und Hüllen (HL) und entsprechende, insbesondere optisch lesbare Markierung wird die abschliessende Zusammenführung sichergestellt. Bei der datentechnischen Erfassung der Filmbehälter (FK) können, z.B. mittels Abtast- bzw. Lesestationen (T, L1, L2), zusätzlich relevante Daten für die Entwicklung, z.B. hinsichtlich unterschiedlicher Behälterformen, Filmtypen und Kundendaten, berücksichtigt werden. In Abhängigkeit von den erfassten Daten kann ferner eine Sortier-Trennstation (ST) für das gesonderte Sammeln von Filmbehältermengen entsprechend vorgegebenen Sortierkriterien gesteuert werden.

0108987

PHOTOCOLOR KREUZLINGEN AG

Durchlauf-Sortiereinrichtung für Photographie-Filmbehälter sowie Verfahren zum Betrieb einer solchen Einrichtung

Die Erfindung bezieht sich auf eine Durchlauf-Sortiereinrichtung für Photographie-Filmbehälter, insbesondere Farbfilmkassetten, die in einer Hülle, insbesondere einer Kassettentasche, untergebracht sind und das Anlieferungsmaterial für nachgeordnete Entwicklungsarbeiten bilden. Die Erfindung bezieht sich ferner auf ein Verfahren zum Betrieb eiber solchen Einrichtung.

Die Arbeiten beim Entwickeln von photographischen Filmen, insbesondere von Farbfilmen, die im allgemeinen in kassettenförmigen Behältern untergebracht sind, werden nach moderner Technik fabrikmässig im Durchlaufbetrieb ausgeführt. Die Filmkassetten werden dabei in Hüllen, sogenannten Kassettentaschen, in grosser Zahl gesammelt bzw. angeliefert und nach Feststellung der für die Verarbeitung sowie für die Zustellung an den Kunden und für die Abrechnung sowie gegebenenfalls für Statistik und Werbung erforderlichen Daten, die sich aus Aufzeichnungen an den Kassetten und/ oder Hüllen ergeben oder aus der Form der Kassetten abgeleitet werden, der Verarbeitung zugeführt. Die Filmentwicklung erfolgt dabei im allgemeinen nach Zusammenspleissen und Zusammenspulen grösserer Filmmengen, die eine gleichartige Verarbeitung erlauben, im Endlos-Durchlaufbetrieb. Dazu muss zunächst eine Sortierung vorgenommen werden, die nach derzeitiger Technik nicht ohne Entnahme der Kassetten aus der Hülle möglich ist, also eine vorherige Trennung erfordert. Die endgültige Trennung von Kassette und Hülle, die jedenfalls die Kundenidentifizierung enthält, konnte aber aus Sicherheitsgründen erst kurz vor dem Zusammenspleissen und Zusammenspulen vorgenommen werden, um Verwechslungen zu vermeiden. Nach der ersten Trennung von Kassette und Hülle zwecks Datenfeststellung musste also eine erneute Zusammenführung bzw. ein Wiedereinsetzen der Kassette in die Hülle vorgesehen werden. Dies bedeutet eine erhebliche Zusatzbelastung hinsichtlich Arbeits- und Zeitaufwand.

Aufgabe der Erfindung ist daher die Schaffung einer Durchlauf-Sortiereinrichtung, mit deren Hilfe ein höherer Automatisierungsgrad bei der Filmverarbeitung erreicht und insbesondere das Wiedereinsetzen der Kassetten in die Hüllen nach der Datenfeststellung vermieden werden kann. Die erfindungsgemässe Lösung dieser Aufgabe kennzeichnet sich hinsichtlich der Einrichtung durch die Ansprüche 1 und 9, während das zugehörige Betriebsverfahren durch den selbständigen Anspruch 14 gekennzeichnet ist. Ausserdem gehören zur Erfindung noch besondere Ausführungen von Sortiervorrichtungen für Filmbehälter bzw. -kassetten, wie sie in den selbständigen Ansprüchen 10 und 12 gekennzeichnet sind und vorzugsweise innerhalb einer Sortiereinrichtung der vorgenannten Art, grundsätzlich aber auch unabhängig von den daran verwirklichten Erfindungsmerkmalen mit Vorteil anwendbar sind.

Infolge der einander zugeordneten Aufnahmen an der Transporteinrichtung für die Kassetten einerseits und die Hüllen andererseits ist während der im Durchlauf anschliessend durchgeführten Erfassung der Daten auf der Hülle bzw. der Kassette und der sich aus der Form und gegebenenfalls sonstiigen Beschaffenheit, insbesondere der Form, der Kassette ergebenden Daten, z.B. der Film-Herstellerfirma, keine besondere Verbindung zwischen Hülle und Kassette mehr erforderlich. Mit Hilfe der erfassten Daten erfolgt dann auch die Steuerung der Sortier-Trennstation und damit die Trennung von Hülle und Kassette bis zur abschliessenden, richtig koordinierten Wiederzusammenführung nach der Entwicklung bzw. nach dem Anfertigen von Vergrösserungen oder Positivbildern. Diese Zusammenführung kann grundsätzlich ebenfalls mit Hilfe der entsprechenden Daten vorgenommen werden, wie sie im allgemeinen von der Hülle entnommen werden (Kundenname oder Kundennummer), sofern eine den Verarbeitungsdurchlauf begleitende Erfassung von Kassette und Film einerseits sowie der Hülle andererseits stattfindet. Mit besonderem Vorteil erfolgt jedoch vor der Trennung von Hülle und Kassette in der Sortier-Trennstation mit anschliessend gesonderten Durchlaufwegen eine zuordnende Markierung von Hülle und Kassette. Dies macht eine begleitende Verfolgung mit Aufrechterhaltung der datentechnischen Identifizierung entbehrlich, jedoch andererseits eine erneute Markierungserfassung zwecks Wiederzusammenführung der einander entsprechenden Hüllen und Kassetten erforderlich. Bei begrnztem Anlagenaufwand, wie er für mittlere Verarbeitungskapazitäten sowie Automatisierungsgrade angezeigt ist, erweist sich die letztgenannte Ausführung oft als zweckmässig.

Die Merkmale und Vorteile der Erfindung werden weiter unter Bezugnahme auf die in den Zeichnungen schematisch dargestellten Ausführungsbeispiele erläutert. Hierin zeigt:

Fig. 1   ein Block-Funktionsschema einer erfindungsgemässen Durchlauf-Sortiereinrichtung,

0108987

Fig. 2 eine Teil-Draufsicht eines aus Hüllenaufnahme und Kassettenaufnahme bestehenden Aufnahmeplatzes einer Durchlauf-Transporteinrichtung nach Fig.1,

Fig. 3 eine Querschnittsansicht eines Aufnahmeplatzes nach Fig.2, gemäss Schnittebene II,

Fig. 4 eine in grösserem Maßstab gehaltene Draufsicht des Aufnahmeplatzes nach Fig.3 und

Fig. 5 eine schematische Draufsicht einer abgewandelten Ausführung eines Aufnahmeplatzes einer Durchlauf-Transporteinrichtung. und

Fig.6 das Blockschaltbild einer erfindungsgemässen Sortiereinrichtung.

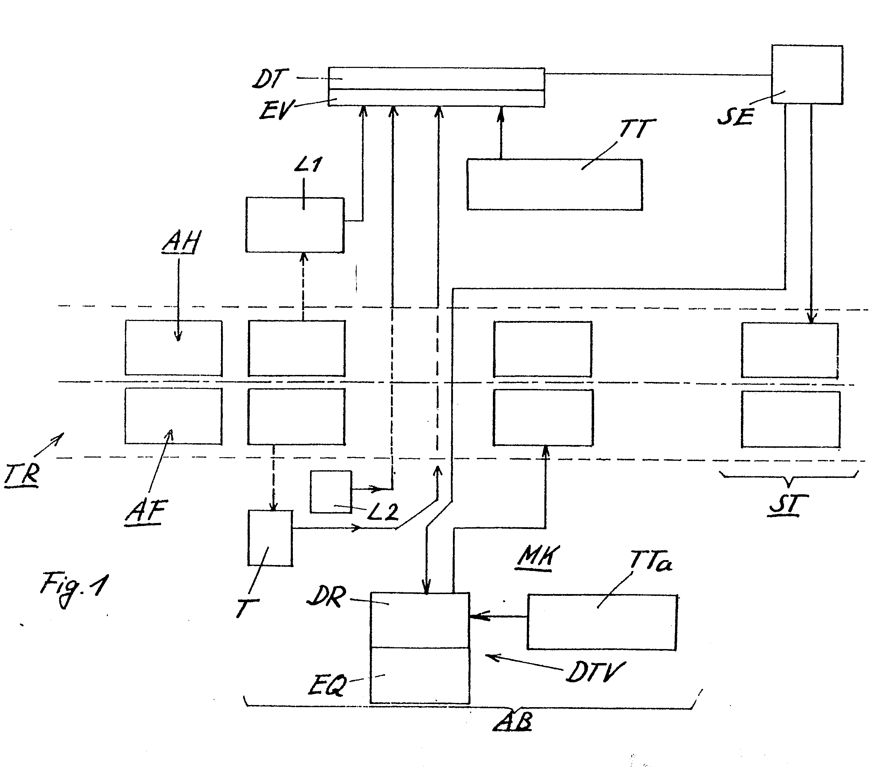

Die Sortiereinrichtung nach Fig.1 umfasst eine Durchlaufband-Transporteinrichtung TR mit aufeinanderfolgenden Aufnahmeplätzen für paarweise zusammengehörige Kassettentaschen als Hüllen sowie Kassetten als Filmbehälter. Jeder Aufnahmeplatz besteht aus einer Hüllenaufnahme AH und einer zugehörigen Filmkassettenaufnahme AF, beide nebeneinanderliegend auf dem Durchlaufband angeordnet. Die als Anlieferungsmaterial ankommenden, gefüllten Kassettenhüllen werden bei der Aufgabe von den zugehörigen Kassetten getrennt und in räumlicher Zuordnung zu letzteren in die Hüllenaufnahme AH eines Aufnahmeplatzes eingelegt. Gleichzeitig wird die zugehörige Kassette in die Aufnahme AF eingelegt. Die damit festgelegte Zuordnung wird während des anschliessenden Durchlaufes durch einen Sortier-Arbeitsbereich AB bis zur Trennung der aus Hülle und Kassette bestehenden Zuordnungspaare in einer nachfolgenden Sortier-Trennstation ST aufrechterhalten, so dass keine Zuordnungsfehler auftreten können.

Der Arbeitsbereich AB umfasst eine mechano- oder opto-elektrische Abtaststation T zur Erfasung von Form- sowie gegebenenfalls auch von Farbmerkmalen der jeweils eingelegten Kassette, beispielsweise als Daten zur Kennzeichnung von Herstellerfirma, Typ oder Format des Films, je nach Verarbeitungsablauf relevant für die Entwicklungsarbeiten. Ferner findet sich hier eine Lesestation L1 zur Erfassung von auf der Hülle aufgezeichneten oder markierten Daten, z.B. betreffend Kundennamen, Kundenwünsche und dergl., ebenso eine weitere Lesestation L2 für die Erfassung von Daten auf der Kassette selbst. Die erfassten Daten sowie gegebenenfalls zusätzlich von der Bedienungsperson abgelesene und in eine Tastatur TT eingegebene Daten gelangen über eine Eingabevorrichtung EV an sich üblicher Art in einen Durchlauf-Datenspeicher DT, etwa im einfachsten Fall einen synchron mit der Transporteinrichtung laufenden Magnetbandspeicher oder für höhere Funktionsansprüche einen dem Durchlaufbetrieb der erfassten Objekte entsprechend zugriffgesteuerten Speicher. Die Speicherplätze SP - rein schematisch in Fig.1 angedeutet - werden den durchlaufenden Aufnahmeplätzen der Transporteinrichtung oder unmittelbar den erfassten Hüllen und Kassetten zugeordnet.

Über eine an den Ausgang des Datenspeichers DT angeschlossene Steuereinrichtung SE wird zunächst eine Markierstation MK als nächstfolgender Bestandteil des Arbeitsbereiches zur übereinstimmenden Markierung der zusammengehörigen Paare von Hüllen und Kassetten angesteuert. Diese Markierstation umfasst eine Etiketten-Aufbringvorrichtung DTV mit einem Etikettenspender EQ und einem Drucker DR zur Erzeugung von optisch lesbaren Markierdaten auf den Etiketten, die sodann als Markierdatenträger paarweise an zugeordneten Hüllen und Kassetten befestigt werden. Mittels einer zusätzlichen Tastatur TTa können ergänzende Informationen von einer Bedienungsperson auf die Markierdatenträger aufgebracht werden. In jedem Fall erfüllen die Markierungen bzw. die Markierdaten den Zweck der permanenten und damit verwechslungssicheren Zuordnung von zusammengehörigen Hüllen und Kassetten, die somit bis zur abschliessenden Zusammenführung in räumlich getrennten Verarbeitungs- bzw. Behandlungswegen geführt werden können.

Anschliessend erfolgt die Trennung von Hüllen und Kassetten in der vom Datenspeicher DT über die Steuereinrichtung SE gesteuerten Sortier-Trennstation ST. Hier werden die Kassetten gleichzeitig entsprechend den verschiedenen Verarbeitungskriterien, die sich aus den erfassten Daten ergeben, in Verarbeitungslose für das folgende Zusammenspleissen und Zusammenspulen sowie für die eigentlichen Entwicklungsarbeiten sortiert. Die hierfür verwendbaren mechanischen Greif- und Transfervorrichtungen sowie die entsprechenden Antriebs- und Steuerelemente sind von an sich bekannter Art und bedürfen in diesem Zusammenhang keiner näheren Darstellung.

Besondere Erwähnung verdient der Umstand, dass unter Anwendung neuerer Technologien auch Farbmarkierungen an den Kassetten bzw. Hüllen über entsprechende Lesestationen der Kennzeichnung und gegenseitigen Zuordnung dieser Elemente nutzbar gemacht werden können. Demgemäss kann die Lesestation L2 insbesondere als Farbmarkierungsleser ausgebildet sein.

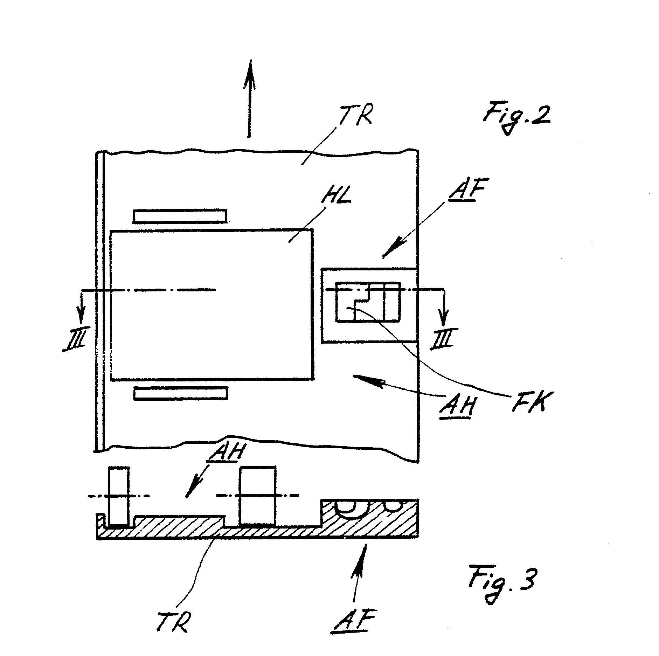

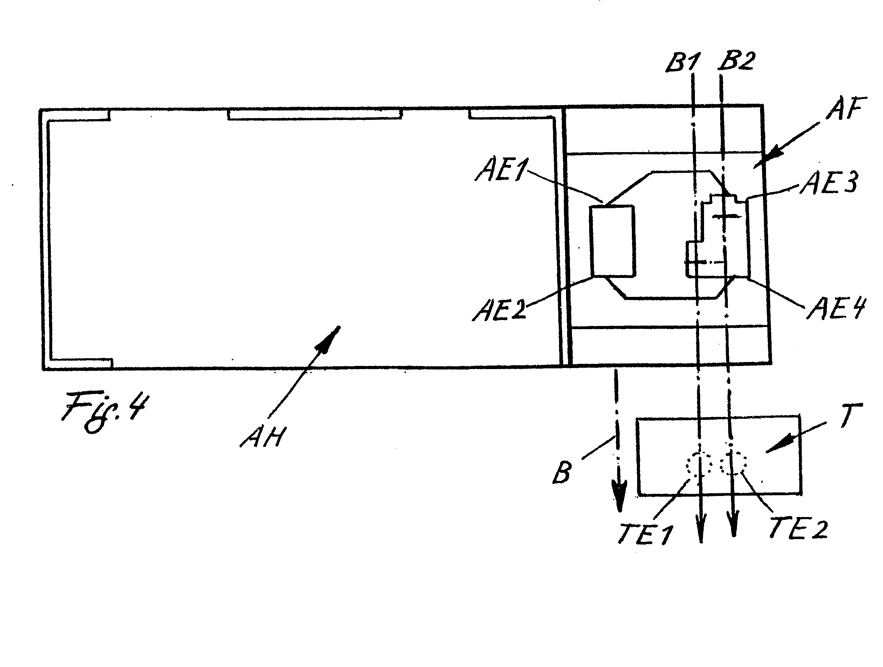

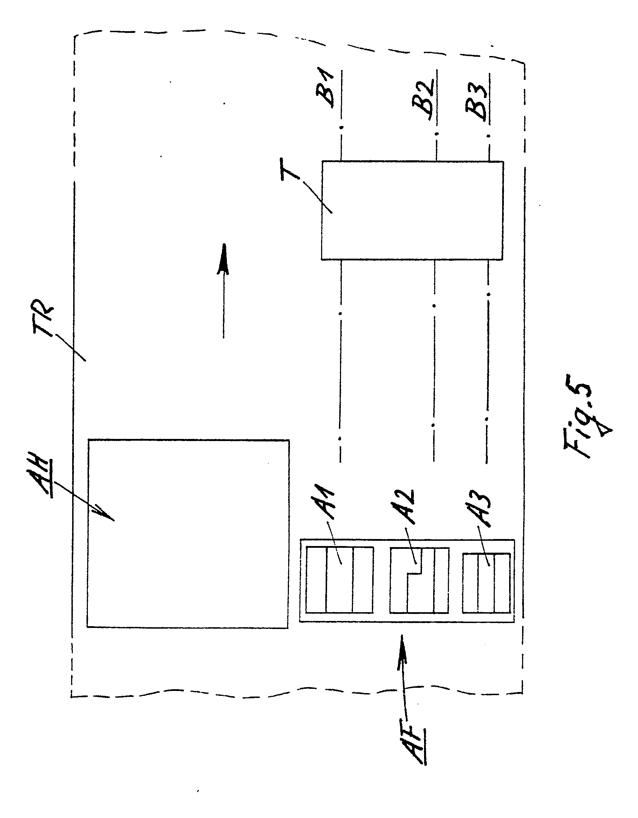

Fig.2 und 3 zeigen einen Aufnahmeplatz mit Hülle HL sowie Kassette FK in zugehörigen Aufnahmen AH bzw. AF. Wie im einzelnen aus Fig.4 ersichtlich, weist die Aufnahme AF eine Mehrzahl von Anschlagelementen AE1 bis AE4 auf, die unterschiedlichen Konturelementen einer zugehörigen Kassettenbauform entsprechen und daher eine sichere und reproduzierbare Positionierung der Kassetten sowie eine entsprechende Selektierung der betreffenden Kassettenbauform ermöglichen. Im Bereich der Transportbahn B der Kassettenaufnahme AF ist in der aus Fig.4 ersichtlichen Weise die Abtaststation T mit gegeneinander versetzten Tastelementen TE1, TE2 angeordnet. Letztere sind wiederum im Bereich von Transportbahnen B1, B2 bestimmter, unterschiedlicher und für verschiedene Varianten einer Kassettenbauform kennzeichnender Formelemente der Bauform angeordnet, so dass die Abtastung eine selektive Erfassung dieser Bauformvarianten sowie gegebenenfalls eine entsprechende Sortierung ermöglicht.

0108987

Bei der Ausführung nach Fig.5 umfasst jede Kassettenaufnahme AF eine zu einer Baugruppe zusammengefasste sowie einer Hüllenaufnahme AH zugeordnete Mehrzahl

von Einzelaufnahmen A1 bis A3 innerhalb eines Aufnahmeplatzes der Durchlauf-Transporteinrichtung TR. Die Einzelaufnahmen sind selektiv je einer Kassettenbauform angepasst, so dass bei der Eingangstrennung von Hüllen und Kassetten mit anschliessendem Einlegen der Kassette in eine passende Einzelaufnahme jeweils nur eine bestimmte dieser Einzelaufnahmen beschickt werden kann. Eine Kassettenanwesenheitsdetektion liefert somit ein eindeutiges Kennzeichnungssignal betreffend die jeweilige Kassettenbauform. Hierzu sind die Transportbahnen B1 bis B3, welche

jeweils einer mittleren Position im Bereich einer der Einzelaufnahmen A1 bis A3 räumlich zugeordnet sind, durch den Wirkungsbereich der Abtaststaion T mit entsprechenden, hier nicht mehr näher dargestellten Tastelementen geführt. Die Abtastung kann in an sich naheliegender Weise mechano- oder opto-elektrisch erfolgen.


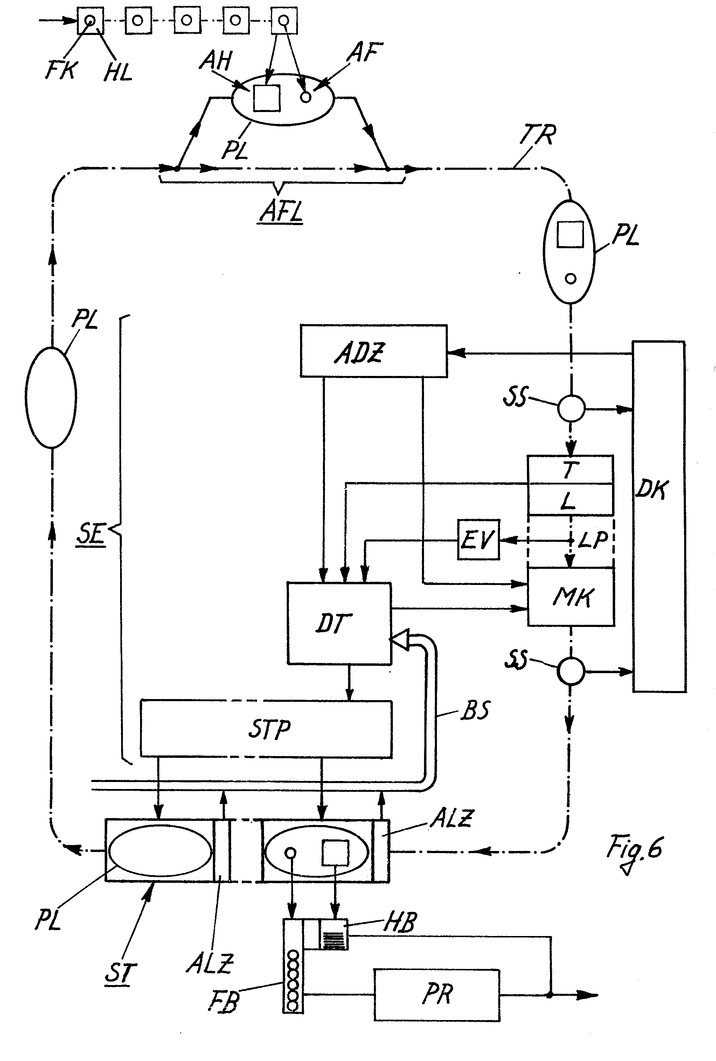

Fig.6 zeigt eine Gesamtanlage zum Sortieren von Filmkasseten FK, die in taschenförmigen Hüllen HL untergebracht sind. Eine schematisch durch eine strichpunktierte Linie angedeutete Durchlauf-Transporteinrichtung TR umfasst eine grosse Anzahl von aufeinanderfolgend in einer geschlossenen Bahn umlaufenden Paletten PL, deren jede eine Filmkassettenaufnahme AF und eine

Hüllenaufnahme AH aufweist. Die Kassettenaufnahme ist vorzugsweise gemäss Fig.4 ausgebildet, so dass die verschiedenen Kassettenbauformen jeweils eine definierte Lage bezüglich der Palette und damit bezüglich der Transportbahn einnehmen und daher einfach und sicher mittels einer mechano- oder optoelektrischen Abtastvorrichtung identifiziert werden können. Das Trennen von Kassette und Hülle mit Einbringen in die Aufnahmen AF bzw. AH erfolgt durch eine Bedienungsperson in einer Auflegestation AFL. Hier wird, wie in Fig.6 schematisch angedeutet, jeweils eine leere Palette PL aus dem stetigen Transportstrom herausgehoben und in eine feste Beschickungslage gebracht, während darunter der Paletten-Transportstrom unbehindert weiterläuft. Auf diese Weise können auch mehrere Auflegestationen AFL ohne gegenseitige Behinderung hintereinandergeschaltet werden, wie dies die volle Ausnutzung der Anlagenkapazität erfordert.

Die beladenen Paletten PL werden durch Absenken wieder in den Transportstrom eingereiht und durchlaufen einen Arbeitsbereich mit Abtaststation T zur Erfassung der Kassettenbauform, optoelektrischer Lesestation L zur Erfassung von entwicklungsrelevanten oder individuellen Daten, die in maschinenlesbarer Form auf der Kassette bzw. auf der Hülle vorhanden sind, sowie Leseplatz LP zur visuellen Erfassung von nicht maschinenlesbaren Daten und Eingabe in den Datenspeicher DT durch eine Eingabevorrichtung EV. Alle so erfassten Daten werden durch einen Adresszuordner ADZ im Speicher DT unter einer Adresse zusammengefasst, die ihrerseits dem Kassetten-Hüllenpaar auf der gerade den Arbeitsbereich durchlaufenden Palette zugeordnet ist. Diese Zuordnung kann mit Vorteil durch einen Detektor DK mit Sensoren SS, die z.B. den Ein- und Austritt einer Palette am Arbeitsbereich kontrollieren und die Behandlung der jeweils nächsten Palette erst nach Austritt der vorangehenden zulassen. Hierzu steht der Detektor DK mit dem Adresszuordner ADZ in geeigneter Steuerverbindung.

Wesentlicher Bestandteil des Arbeitsbereiches ist ferner eine Markierstation MK, die mit dem Adresszuordner ADZ in Steuerverbindung steht und sowohl die Kassette wie auch die Hülle mit einer der zugeordneten Adresse entsprechenden Individualmarkierung versieht, z.B. durch Aufbringen eines Etiketts mit entsprechendem Aufdruck. Hierzu gegebenenfalls erforderliche Daten erhält die Markierstation MK in geeigneter zeitlicher Zuordnung unter der Steuerwirkung des Adresszuordners ADZ vom Datenspeicher DT. Wenn die Markierstation MK einen geeigneten Drucker enthält, kann diese Steuer- und Datenverbindung auch dazu

0108987

ausgenutzt werden, die Hülle und/oder die Kassette mit für die Verarbeitung bzw. die Ablieferung an den Kunden oder dergl. relevanten, visuell oder maschinelle lesbaren Daten zu versehen. Zur Ableitung solcher Daten aus den abgetasteten, abgelesenen oder manuelle eingegebenen Primärdaten kann der Datenspeicher zweckmässig in an sich üblicher Weise mit einem geeigneten, in Fig.6 der Einfachheit halber nicht dargestellten Datenprozessor verbunden werden.

Es versteht sich übrigens, dass die Adresse zur Individualkennzeichenung der Kassetten-Hüllenpaare insbesondere bei räumlich kompakten Anlagen vorteilhaft aus einer Durchlauf-Zählnummer bestehen kann.

Anschliessend durchläuft der Paletten-Transportstrom eine Sortier-Trennstation ST, die aus einer Mehrzahl von in Bezug auf den Transportstrom hintereinandergeschalteten Sortierstufen mit je einem Adressleser oder -zähler ALZ und je einem Ausgang für Kassetten-Hüllenpaare besteht. Die Adressleser bzw. -zähler stehen über einen Datenbus BS mit dem Datenspeicher DT in Verbindung und melden die Adresse des jeweils eintreffenden Kassetten-Hüllenpaares an den Speicher, wodurch die entsprechenden Daten aufgerufen und einem Sortierprozessor STP zugeführt werden. Letzterer bestimmt hieraus den zugehörigen Sortierausgang und aktiviert über eine entsprechende Steuerverbindung die entsprechende Sortierstufe. Es versteht sich, dass jeder solcher Datenaufruf mit einer Kennzeichnung der aufrufenden Sortierstation versehen wird. Wenn jedoch etwa bei Anlagen geringerer Leistung jeweils nur eine Palette allein die Sortier-Trennstation durchläuft, bevor die nächste Palette eintritt, so bedarf es für die gesamte Sortier-Trennstation nur eines Adresslesers bzw- -zählers, und auch die Aufrufkennzeichnung entfällt.

Im Falle von räumlich kompakten Anlagen oder sonstigen Anlagen mit eindeutiger und sicherer Durchlauf-Verfolgung der aufeinanderfolgenden Paletten bzw. Kassetten-Hüllenpaare kann im übrigen auf eine Adressidentifizierung an der Sortier-Trennstation verzichtet werden. Eine solche Durchlauf-Verfolgung kann vorteilhaft mit einem Synchronbetrieb von Transport und Steuerung erreicht werden, wobei eine Zählung zur Palettenidentifizierung an der Sortier-Trennstation in Betracht kommt.

Es versteht sich, dass die erfindungsgemässe Zuordnungssteuerung auch für andere Individual-Behandlungsstationen verwendbar ist.

Mit dem Ausstossvorgang am Ausgang einer Sortierstufe verlassen Kassette und Hülle die Palette und werden damit auch voneinander getrennt. Infolge der Individualkennzeichnung bereitet die spätere Zusammenführung keine Schwierigkeiten.

An jedem Sortierausgang befinden sich Transportbehälter, bestehend aus Kassettenbehälter FB und Hüllenbehälter HB, in denen eine Sammlung zur Weiterverarbeitung in der Produktions- bzw. Entwicklungsabteilung PR erfolgt. Hierzu werden die Behälter FB und HB voneinander getrennt.

AP 160

PHOTOCOLOR KREUZLINGEN AG

Patentansprüche

1. Durchlauf-Sortiereinrichtung für Photographie-Filmbehälter, insbesondere Farbfilmkassetten, die in einer Hülle, insbesondere einer Kassettentasche, untergebracht sind und das Anlieferungsmaterial für nachgeordnete Entwicklungsarbeiten bilden, gekennzeichnet durch folgende Merkmale:

a) Es ist eine Durchlauf-Transporteinrichtung (TR) mit in Durchlaufrichtung aufeinanderfolgenden und einander zugeordneten Aufnahmen (AF, AH) für Filmbehälter (FK) einerseits und Hüllen (HL) andererseits vorgesehen;

b) die Transporteinrichtung (TR) erstreckt sich durch einen Arbeitsbereich (AB), der mindestens eine Abtast- und/oder Lesestation (T, L1, L2) zur datentechnischen Erfassung von den einzelnen Filmen bzw. Filmbehältern (FK) zugeordneten Informationen umfasst;

c) es ist ein Datenspeicher (DT) mit den einzelnen Filmen oder Filmbehältern (FK) bzw. Hüllen (HL) oder den entsprechenden Aufnahmen (AF, AH) zuordenbaren Speicherplätzen (SP) sowie mit einer der Abtast- bzw. Lesestation des Arbeitsbereiches (AB) zugeordneten Daten-Eingabevorrichtung (EV) vorgesehen;

d) dem Arbeitsbereich (AB) ist eine Sortier- Trennstation (ST) für das gesonderte Sammeln von Filmbehältermengen entsprechend wenigstens einem gemeinsamen Sortierkriterium nachgeordnet;

e) es ist eine Steuereinrichtung (SE) für die Aktivierung der Sortier-Trennstation (ST) und der Speicherplätze (SP) des Datenspeichers (DT) in Abhängigkeit vom Eintreffen oder Durchlauf und/oder von einer Detektion der Filmbehälter und/oder Hüllen an der Sortier-Trennstation (ST) vorgesehen.

2. Durchlauf-Sortiereinrichtung nach Anspruch 1, dadurch gekennzeichnet, dass der Arbeitsbereich (AB) mindestens eine optoelektrische Lesestation (L1, L2) für die selbsttätige Erfassung von auf dem Filmbehälter (FK) bzw. auf der Hülle (HL) vorhandenen Datenaufzeichnungen umfasst.

3. Durchlauf-Sortiereinrichtung nach Anspruch 1 oder 2, dadurch gekennzeichnet, dass der Arbeitsbereich (AB) mindestens einen optoelektrischen Farbmarkierungsleser (L2) umfasst.

4. Durchlauf-Sortiereinrichtung nach einem der vorangehenden Ansprüche, dadurch gekennzeichnet, dass der Arbeitsbereich (AB) mindestens eine, vorzugsweise den Filmbehälteraufnahmen (AF) der Transporteinrichtung (TR) zugeordneten, mechano- oder optoelektrische Abtastvorrichtung (T) zur Erfassung von Form-Merkmalen der Filmbehälter (FK) und/oder Hüllen (HL) umfasst.

5. Durchlauf-Sortiereinrichtung nach einem der vorangehenden Ansprüche, dadurch gekennzeichnet, dass die Daten-Eingabevorrichtung (EV) eine Tastatur (TT) für die zusätzliche Eingabe von Sortier- und/oder Verarbeitungsdaten, insbesondere von durch eine Bedienungsperson vom Filmbehälter und/oder von der Hülle abgelesenen Daten, umfasst.

6. Durchlauf-Sortiereinrichtung nach einem der vorangehenden Ansprüche, dadurch gekennzeichnet, dass der Arbeitsbereich (AB) mindestens eine mit dem Datenspeicher (DT) und der Steuereinrichtung (SE) und/oder mit einer manuellen Eingabetastatur (TTa) in Wirkverbindung stehende Markierstation (MK) für das Aufzeichnen von insbesondere optisch lesbaren Daten auf die Filmbehälter bzw. Hüllen umfasst.

7. Durchlauf-Sortiereinrichtung nach Anspruch 6, dadurch gekennzeichnet, dass die Markierstation (MK) mindestens eine Markierdatenträger-Aufbringvorrichtung (DTV), insbesondere eine Etiketten-Aufbringvorrichtung, umfasst.

8. Durchlauf-Sortiereinrichtung nach Anspruch 7, dadurch gekennzeichnet, dass der Markierdatenträger-Aufbringvorrichtung (DTV) mindestens ein mit dem Datenspeicher (DT) und der Steuereinrichtung (SE) in Wirkverbindung stehender Datendrucker (DR) vorgeordnet ist.

9. Durchlauf-Sortiereinrichtung für Photographie-Filmbehälter, insbesondere Farbfilmkassetten, die in einer Hülle, insbesondere einer Kassettentasche, untergebracht sind, insbesondere Einrichtung nach einem der Ansprüche 1 bis 8, gekennzeichnet durch folgende Merkmale:

a) es ist mindestens eine Markierstation für die individuelle, insbesondere optoelektrisch lesbare Markierung der Filmbehälter und/oder Hüllen vorgesehen;

b) an mindestens einer nachgeordneten Behandlungsstation, insbesondere einer Sortier- und/oder Trennstation, ist ein Markierungsleser für die Individualdetektion der Filmbehälter und/oder der Hüllen vorgesehen;

c) es ist eine Steuereinrichtung vorgesehen, die einerseits mit der Markierstation und andererseits mit dem Markierungsleser in Wirkverbindung steht und mindestens einen Steuerausgang für die der Individualmarkierung zugeordnete Aktivierung einer nachgeordneten Behandlungsstation, insbesondere der Sortier- und/oder Trennstation, aufweist.

10. Sortiervorrichtung für Filmbehälter, insbesondere Filmkassetten, insbesondere zur Verwendung als Filmbehälteraufnahme an einer Durchlauf-Sortiereinrichtung nach einem der Ansprüche 1 bis 9, dadurch gekennzeichnet, dass eine Mehrzahl von je einer Filmbehälterbauform selektiv formangepassten Einzelaufnahmen (A1, A2, A3) zu einer Baugruppe räumlich zusammengefasst ist und dass jede dieser Baugruppen jeweils einer Filmbehälteraufnahme (AF) einer Transporteinrichtung (TR) zugeordnet ist.

11. Sortiervorrichtung nach Anspruch 10, dadurch gekennzeichnet, dass mindestens eine Abtastvorrichtung (T) zur selektiven Prüfung auf Anwesenheit eines Filmbehälters in einer Einzelaufnahme (A1 oder A2 oder A3) und zur Gewinnung von Sortier- bzw. Verarbeitungsdaten entsprechend der jeweiligen Filmbehälterbauform vorgesehen ist.

12. Sortiervorrichtung für Filmbehälter, insbesondere Filmkassetten, insbesondere zur Verwendung als Filmbehälteraufnahme an einer Durchlauf-Sortiereinrichtung nach einem der vorangehenden Ansprüche, gekennzeichnet durch folgende Merkmale:

a) es ist eine Transporteinrichtung (TR) mit aufeinanderfolgenden Filmbehälteraufnahmen (AF) vorgesehen;

b) die einzelnen Filmbehälteraufnahmen (AF) weisen eine Mehrzahl von Anschlagelementen (AE1, AE2 ...) auf, die bei einer Mehrzahl von unterschiedlichen Filmbehälterbauformen übereinstimmenden Konturelementen entsprechen;

c) der Transportbahn (B) der Filmbehälteraufnahmen (AF) ist mindestens eine Abtaststation (T) mit einer Mehrzahl von Tastelementen (TE1, TE2 ...) räumlich zugeordnet;

d) die Tastelemente (TE1, TE2 ...) der Abtastvorrichtung (T) sind im Bereich der Transportbahnen (B1, B2 ...) von unterschiedlichen Formelementen der zu behandelnden Filmbehälterbauformen angeordnet.

13. Sortiervorrichtung nach einem der Ansprüche 10 bis 12, dadurch gekennzeichnet, dass je einer Filmbehälteraufnahme (AF) eine Filmhüllenaufnahme (AH) zugeordnet ist.

14. Verfahren zum Betrieb einer Durchlauf-Sortiereinrichtung für Photographie-Filmbehälter, insbesondere Farbfilmkassetten, die in einer Hülle, insbesondere einer Kassettentasche, untergebracht sind und das Anlieferungsmaterial für nachgeordnete Entwicklungsarbeiten bildet, insbesondere Verfahren zum Betrieb einer Durchlauf-Sortiereinrichtung nach einem der vorangehenden Ansprüche, dadurch gekennzeichnet, dass das Anlieferungsmaterial in Filmbehälter (FK) und Hüllen (HL) getrennt wird und dass anschliessend die Filmbehälter (FK) einerseits und die Hüllen (HL) andererseits in einander zugeordnete Aufnahmen (AF bzw. AH) eingebracht werden.

15. Verfahren nach Anspruch 14, dadurch gekennzeichnet, dass die zusammengehörigen Filmbehälter (FK) und Hüllen (HL) vor dem Trennen mit insbesondere optoelektrisch und/oder visuell lesbaren Markierungen zur übereinstimmenden Individualkennzeichnung versehen werden.

Fig.1

Fig.2

Fig.3

Fig.4

B1 B2

AF

AE1

AE3

AE2

AE4

AH

B

T

TE1

TE2

Fig.5

APC-161 3/4
0108987

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 259 934 (AGFA-GEVAERT A.G.) <br> * Seiten 6-8; Figuren 1-4 * | 1,2,10 ,14 | G 03 D 15/00 <br> G 06 K 17/00 |
| | --- | | |
| A | CH-A- 483 038 (VAN PRAAG) <br> * Insgesamt * | 1 | |
| | --- | | |
| A | US-A-4 065 661 (JASKOWSKY) | 1,2,5-7,14 | |
| | --- | | |
| A | DE-A-2 626 448 (AGFA-GEVAERT A.G.) | 1,5 | |
| | ----- | | |

**RECHERCHIERTE SACHGEBIETE (Int. Cl. 3)**

B 07 C
G 03 D
G 06 K

Der vorliegende Recherchenbericht wurde für alle Patentansprüche erstellt.

| Recherchenort <br> DEN HAAG | Abschlußdatum der Recherche <br> 10-02-1984 | Prüfer <br> PESCHEL W. |
|---|---|---|